Europäisches Patentamt

(19) European Patent Office

Office européen des brevets

(11) Publication number: **0 136 159**
A2

(12) # EUROPEAN PATENT APPLICATION

(21) Application number: **84306428.8**

(22) Date of filing: **20.09.84**

(51) Int. Cl.⁴: **A 21 D 8/04, A 21 D 13/08**

(30) Priority: **20.09.83 US 533955**

(43) Date of publication of application: **03.04.85**
Bulletin 85/14

(84) Designated Contracting States: **AT BE CH DE FR GB IT LI LU NL SE**

(71) Applicant: **NABISCO BRANDS INC., Nabisco Brands Plaza, Parsippany New Jersey 07054 (US)**

(72) Inventor: **Maselli, John A., 45 Old Highway, Wilton Connecticut 06897 (US)**

(74) Representative: **Thomas, Roger Tamlyn et al, D. Young & Co. 10 Staple Inn, London WC1V 7RD (GB)**

(54) Baked products exhibiting stable properties characteristic of freshly-baked products and process for preparing such products.

(57) This application relates to baked products, particularly cookies, which exhibit storage-stable properties characteristic of their freshly-baked counterpart products (and particularly with respect to the presence of distinct regions exhibiting stable crispy and chewy texture), prepared by forming a composite dough wherein a first sucrose-containing dough, bakeable to a crispy product, completely surrounds, enrobes or sandwiches a second sucrose-containing dough which is bakeable to a chewy product by reason of the in situ enzymatic development in this second dough of materials which are crystallization-resistant and inhibit the crystallization of any sucrose present in the second dough.

## BAKED PRODUCTS EXHIBITING
## STABLE PROPERTIES CHARACTERISTIC OF
## FRESHLY-BAKED PRODUCTS AND
## PROCESS FOR PREPARING SUCH PRODUCTS

### Field of the Invention:

The present invention relates to bakeable flour-based products, and particularly to a composite cookie dough bakeable to cookies which retain their freshly-baked texture, flavor and appearance characteristics. The invention also relates to processes for preparing such bakeable products, and to processes for preparing baked confectionary products from the composite doughs of this invention.

### Background of the Invention

In the past baked confectionary products have been prepared which are of the ready-to-serve variety, i.e., finished, fully-baked products intended to be distributed and sold to consumers many days after preparation and packaging by the manufacturer. Ready-to-serve packaged cookies which closely mimic the organoleptic properties associated with freshly-baked cookies are also known to the bakery arts.

The difficulty in manufacturing ready-to-serve cookies which retain a degree of moistness, chewiness or softness characteristic of fresh, home-baked cookies is known to be primarily a function of the dynamic loss of moisture from the baked cookie over time, typically a result of crystallization of the sugars (e.g. sucrose) present in cookie formulations. In recognition of this knowledge, the baking arts have provided a variety of methods aimed at retaining moisture and chewiness in cookie products by inhibiting the crystallization of sucrose present or employing sugars in the cookie formulation which have a lesser tendency to crystallize than sucrose. For example, it is known to manufacture ready-to-serve cookies wherein crystallizable sugars (e.g. sucrose) are replaced, either in whole or in part, with non-crystallizable or slowly crystallizable sugars relative

2

to sucrose under the same conditions. Such sugars include fructose, invert sugar (a mixture of fructrose and dextrose), honey and the like which function to retain moisture in baked doughs or batters and, if crystallizable sugars such as sucrose remain present in the formulation, to inhibit the crystallization of such sugars. It is also known simply to add to conventional cookie formulations, materials other than sugars which also act as moisture retainers and crystallization inhibitors.

One means of providing ready-to-serve cookies with the desired textural crisp/moist combination characteristic of fresh, home-baked cookies is to prepare cookies which contain distinct, texturally differing regions. One region may contribute a crisp texture, while a second region contributes a soft, moist or chewy texture. One example of that approach is found in U.S. Patent No. 3,026,205 to Irwin M. Stone wherein a first conventional layer of sucrose-containing dough is overlaid with a second layer of sucrose-containing conventional dough which contains sufficient alpha-amylase to generate in this second layer products which are crystallization-resistant, bind water and interact with sucrose to inhibit its crystallization, and to cause the sucrose to thereby also retain its water binding capacity. The first sucrose-containing dough layer which is enzyme-free, on the other hand, bakes to a crisp texture.

Another example of cookie preparations following the approach described above is found in published European Patent Application No. 0031718 (published July 8, 1981; application number 80304703.4). According to that application, two doughs are prepared, one dough containing conventional cookie ingredients including crystallizable sugars (sucrose) and the other dough containing conventional cookie ingredients with crystallization-

3

resistant sugars (e.g., fructose, maltose, dextrose). Lamination of the doughs and baking provides a cookie having discrete regions of chewy texture (attributable to the portion containing crystallization-resistant sugars) and discrete regions of crisp texture (attributable to the portion containing crystallizable sugars).

Another means which has been proposed for the production of baked products, such as cookies, which exhibit a stable textural crisp/moist combination characteristic of freshly-baked cookies, is the *in situ* development, in a single-dough, of distinct dough regions which result, upon baking, in the production of a product having both crispy and chewy, moist textural regions.

An example of such an approach is found in U.S. Patent No. 2,801,921 to William Moses, wherein conventional sucrose- containing dry brownie or cookie mix formulations are augmented with the addition of invertase enzyme. With the addition of water to the dry mix to form a batter or dough which is then baked in appropriate form, the invertase effects inversion of the sucrose to invert sugar. The presence of the invert sugar so generated inhibits crystallization of the sucrose. This effect is localized, however, in the center of the cookie or brownie as a result of the inherent nature of the baking process, i.e., the higher temperatures achieved in the outer portions of the cookie dough during baking inactivate the enzyme and retard or prevent its inversion to sucrose in these portions. The inner portions of the cookie dough, owing to their insulation from direct heat and the considerable moisture therein, do not reach temperatures high enough to cause enzyme inactivation. The resultant product consists of a moist, chewy inner region surrounded by regions which are dry or crisp as a result of the unaffected sucrose crystallized in such regions.

4

Similar processes are described in the earlier-mentioned U.S. Patent No. 3,026,205 to Irwin M. Stone and U.S. Patent No. 4,344,969 to Rudolph W. Youngquist et al. In the Stone patent, doughs or batters are formulated which contain flour, sugar, shortening, water and the enzyme alpha-amylase. During baking, the alpha-amylase becomes quickly inactivated in the regions of the dough or batter which are either directly exposed to the oven heat or in contact with a conductive surface (e.g., a baking sheet or pan). In such regions, therefore, during normal baking the development of a dry, crisp crumb structure occurs. The internal portion of the dough does not, however, reach temperatures at which alpha-amylase becomes inactive. In these internal portions, therefore, the alpha-amylase is free to act upon the starches in the dough to produce therefrom dextrins and mono and disaccharides which are non-crystallizable (or only slowly crystallizable),and which inhibit the crystallization of normally crystallizable sugars (e.g., sucrose). The resultant product contains soft, moist regions and dry crisp regions. In the Youngquist et al. patent, enzymes such as invertase or amylases are employed to provide baked, ready-to-serve cookies with soft, moist chewy regions, with steps taken to inhibit enzyme activity in other regions so as to permit normal development of crystallized dry, crisp regions.

Although the foregoing procedures provide potentially technologically acceptable routes to the provision of cookies and other baked products which exhibit a combined crispy/chewy texture long after their actual preparation, difficulties exist in adapting these procedures to high-speed, high-volume commercial manufacturing techniques and in achieving the desired results in a cost-effective manner.

4

5

More specifically, processes involving enzyme utilization in a single dough to develop regions of moist, soft, chewy texture while retaining regions of crisp texture, require a degree of control as to enzyme handling, baking conditions and the like which can be somewhat difficult to achieve in a large-scale environment. On the other hand, processes which require utilization of separate dough layers which are formulated ab initio to be bakeable to regions having crispy texture and regions having a chewy texture require the preparation and handling of doughs (for producing of the chewy regions) containing significant amounts of materials such as honey, fructose and the like. Doughs formulated from such materials are often quite viscous and tacky and present significant difficulties in handling and formation on conventionally employed production equipment.

In addition, materials such as fructose and honey undergo browning reactions during baking which lead to differences in color between the chewy regions and crispy regions of the baked product, which differences often are not desired. One of the advantages of the baked cookie products which are produced from the composite dough and process of this invention is that they can be made substantially uniform with respect to color (with the exception of materials such as nuts or flavor chips which may be present.)

To some degree, the color differential can be masked through use of suitable colored ingredients or color additives (e.g., chocolate), but in cookies such as chocolate chip cookies or vanilla cookies, for example, the opportunities for color masking are limited. Also, while it is possible to minimize such differences by completely enveloping the chewy cookie dough with the conventional sucrose-containing dough, thereby keeping

6

the chewy dough out of direct contact with heating surfaces and out of direct exposure to the heated atmosphere, color differentials may still develop.

## Summary of the Invention

The present invention concerns composite dough products capable of being baked to baked products, such as cookies, and the provision of baked products, and especially cookies, from such dough composites, which have a storage-stable plurality of crispy and. chewy regions.. Cookies baked from the composite dough of this invention have been found to retain the crispy and chewy textural. dichotomy characteristic of freshly baked cookies for extended time periods.

The method of the present invention for preparing baked products, such as cookies, which possess storage-stable regions of crispy texture and storage-stable regions of chewy, moist texture, as hereinafter described, is adaptable to high-volume: high-speed commercial manufacturing requirements.

The method hereinafter described furthermore provides baked products and cookies which present a substantially uniform color throughout the crumb structure of the product.

The process hereinafter described comprises the steps of:

    a. preparing a first dough comprising flour, shortening, water and a readily-crystallizable sugar component;

    b. preparing a second dough comprising flour, shortening, water and an _in situ_ developable crystallization-resistant sugar component, said developable component comprising an enzyme

7

and, if required, an added substrate for the enzyme, wherein, at the conditions of baking, the enzyme acts upon its substrate to convert the substrate, at least in part, to materials which are crystallization-resistant (or only slowly crystallizable), bind water and inhibit crystallization of any readily-crystallizable sugars in the second dough;

c. forming a composite dough by surrounding or sandwiching the second dough within or between the first dough such that no surface of the second dough is, during subsequent baking, in direct contact with a heated baking surface or directly exposed to a heated atmosphere; and

d. baking the composite dough, at conditions which do not significantly inactivate the enzyme in the second dough, to form a final baked product in which there are present, after equilibration, regions contributed by said first dough exhibiting a crispy texture and regions contributed by said second dough exhibiting a moist, chewy texture.

Thus cookies which exhibit a storage-stable plurality of crispy and chewy regions and which are substantially uniform in colour throughout their cross section and exterior surface can be ~~be~~ prepared by enrobing an enzyme-containing cookie dough with a sugar-containing cookie dough, or by sandwiching the enzyme-containing cookie dough between upper and lower layers of a sugar-containing dough, and then baking the dough composite at a temperature and under conditions at which the enzyme is active in generating materials required for formation of a crystallization-resistant sugar component in the inner, enzyme-containing dough. The outer dough layer containing the crystallizing sugar bakes to an outermost crisp region, while the activity of the enzyme present in the inner dough results in a

8

discrete band or region of a moist and soft or chewy baked dough between the layers of the baked crisp dough.

This invention also provides a composite dough for preparing a baked, crumb-continuous flour-based product having distinct storage-stable regions of crumb having a crispy texture and distinct regions of crumb having a chewy texture, said composite dough comprising:

a. a first dough portion, bakeable to a crispy crumb structure comprising flour, water, shortening and sugar; and

b. a second dough portion bakeable to a chewy, moist crumb structure including as ingredients thereof at least flour, water, shortening and an enzyme, wherein at least one ingredient of the second dough is acted upon by the enzyme when the composite dough is baked to provide in the baked second dough an amount of crystallization-resistant sugar effective to bind water and to inhibit the crystallization of any readily-crystallizable sugar present in the second dough;

c. wherein the second dough portion is enrobed in the first dough portion; and

d. the composite dough is bakeable to a product in which there is present after equilibration of moisture present in the baked product, discrete regions of crumb contributed by the first dough having a crispy texture, and discrete regions of crumb contributed by the second dough having a moist, chewy texture.

9

## Detailed Description of the Invention

In accordance with this invention, a baked, flour-based product is provided which, long after its initial preparation, substantially duplicates the combined crispy and chewy textural dichotomy characteristics of freshly-baked products. While the invention is applicable to a wide variety of product shapes, sizes and formulations, the description will focus on the preparation of products recognizable as "cookies", i.e., small cakes which are prepared from doughs or batters.

No attempt is made herein to distinguish between flour-containing baked products referred to by traditional "category" names: e.g., cookie, cake, biscuit, cracker, or the like, because the various products referred to by one of these "category" names are often virtually identical in major or basic ingredients to other products traditionally given different category names. Similarly, the terms batter and dough define overlapping compositions. Thus, the only significance which is ascribed to the foregoing terms and "category" names is that which can be ascribed on the basis of historical usage, rather than technical significance or applicability of the present invention.

The baked cookies of the present invention are of the so-called "crumb-continuous" type. In contrast to iced cookies, glazed cookies, filled cookies, sandwich-type cookies, etc., the crumb-continuous cookies of this invention are characterized by a substantially continuous cookie crumb matrix visibly extending throughout its cross section, typically interrupted only by the presence of additives separate from the dough such as nuts, chocolate chips, butterscotch chips, etc., conventionally employed in drop-type cookies.

As employed herein, the term crystallization-resistant sugar means a sugar component which contributes sweetness to the baked product made from the dough in which it is contained, is capable of binding water at the conditions of storage of the baked cookies and is only slowly crystallizable (relative to sucrose), if at all, under the conditions of baking and storage employed. An important feature of the present invention is the in situ development of the crystallization-resistant sugar component in the chewy cookie dough, rather than including the crystallization-resistant sugar component as an ingredient of the dough prior to baking.

The crystallization resistant sugar component, developed in situ in the composite cookie dough of this invention through enzymatic action, can comprise any of the materials capable of being generated in dough products through enzymatic conversion and which, either alone or in combination, meet the definition of "crystallization-resistant", given above. Among these materials are glucose, maltose, invert sugar, fructose, high fructose corn syrup, corn syrup, honey, dextrins, low molecular weight saccharides, and the like. Any one or more of these materials may also be overtly added to the enzyme-containing dough as part of its initial formulation, so long as the levels of use are sufficiently low to preclude difficulties with respect to processing of the dough and browning reactions.

As employed in the context of the present invention, the term "chewy" is intended to define textures which possess a discernible degree of plasticity. Chewiness also connotes impressions of softness and moistness. Crispness and chewiness can be described in terms of taste panel tests which take as standards the texture of fresh saltine crackers having a moisture content of about 2% (rating of 0) and a freshly baked cookie having a distinctly chewy texture throughout (rating of 10): i.e.,

11

chewy cookies prepared in accordance with the following recipe:

| 2/3 c. | sugar |
|--------|-------|
| 1/4 c. | butter or regular margarine |
| 1 tsp. | ground ginger |
| 1/2 tsp. | ground cinnamon |
| 1/2 tsp. | baking soda |
| 1/2 tsp. | salt |
| 1/2 tsp. | vanilla |
| 1 | egg |
| 1/2 c. | honey |
| 1 1/2 c. | sifted flour |

The cookies are prepared by combining 2/3 cup of sugar, butter, ginger, cinnamon, baking soda, salt and vanilla in a large mixing bowl and creaming the ingredients until they are light and fluffy. Next the eggs are added and beat in until the mixture is very fluffy. The honey is then blended in, followed by the blending in of the flour a little at a time. The dough is dropped by teaspoonfuls 2 1/2 inches apart onto a lightly greased baking sheet, baked at 350°F for 10 to 15 minutes until lightly browned and removed at once from the baking sheet to racks to cool thoroughly.

Employing the rating scale described above, the chewy portion of the product of this invention preferably has a rating of at least 3 and most preferably at least 5. The crispy portion preferably has a rating of less than 5 and most preferably less than 2. The regions should show a difference in ratings of at least 2 units, and most preferably at least 5 units.

The baked cookies prepared in accordance with the present invention are also storage stable both in the sense of microbial stability and maintenance of their freshly baked tex-

11

12

tural dichotomy over long periods of time. Preferably, the cookies of this invention maintain their crispy/chewy textural difference, found in the cookie shortly after baking, for at least about 3 weeks.

A significant feature of the present invention is the utilization of a dough composite to provide a final, crumb-continuous baked cookie product having crispy and chewy regions attributable to the different doughs utilized in making the composite. The dough employed for contributing the crispy regions of the final baked product can be a conventional sucrose-containing dough comprised of flour, water, shortening and sucrose, as well as other optional ingredients such as flavorants, colorants, nuts, flavor chips and the like. Thus, the dough which contributes the crispy region will contain a readily-crystallizable sugar comprising sucrose.

In addition to sucrose, the dough which contributes the crispy region may also include crystallization-resistant sugars such as maltose, fructose, honey, invert sugar, etc. so long as such materials are employed at levels which will not inhibit crystallization of the sucrose, will not cause the dough to be difficult to handle or process, will not cause the dough to become undesirably colored due to browning reactions, and will not bind water to such a degree as to detract from the desired crispness of the baked dough. Generally, the level of such materials in the crispy cookie dough will not exceed about 15% by weight of the sucrose present in the dough which contributes the crispy region, and will not exceed 5 to 10% by weight of the overall crispy dough formulation.

The dough formulation employed to provide the moist, chewy regions in the final baked cookie comprises, at a minimum,

12

0136159

13

flour, water, shortening and an enzyme. As will be explained in greater detail below, the enzyme is chosen so as to result in the *in situ* generation within the chewy dough formulation of a crystallization-resistant sugar component.

The flour and shortening employed in the doughs used in the present invention are selected from conventional ingredient lines. For example, the shortening can be any edible fat or oil or mixtures thereof suitable for cooking or baking and may further include conventional food-grade emulsifiers. The flour can be any comminuted cereal grain or edible seed meal such as wheat flour, corn flour, corn starch, barley flour, and the like. The dough may contain typical flavorants and colorants (including solid or semi-solid ingredients such as chocolate chips or raisins).

The water content of the doughs generally will be such that the moisture content of a cookie baked therefrom will be less than about 10% by weight, typically between about 4% to 8% by weight, and such that the water activity ($a_w$) of a cookie baked therefrom (in conjunction with the use of suitable water-binding materials in the formulation) will be in the range of from about 0.25 to about 0.80.

The enzyme employed herein is selected to act upon one or more of the components of the cookie dough to provide the crystallization-resistant sugar component. Of course, if the recipe for the cookie dough selected for use does not include a substrate or a sufficient amount of substrate for the enzyme, an additional ingredient may be added to the dough because it is a good substrate for the enzyme. Typically, the substrate for the enzyme will be either sugar or a starch component present in the cookie dough. For example, flour, one of the basic cookie

13

14

dough ingredients mentioned above, typically has a starch content of about 50% by weight and provides a substrate for the
enzymatic action of carbohydrases.

Enzymes which are suitable for use herein include
glycosidases and polysaccharidases which, after acting upon
carbohydrates, provide crystallization-resistant sugars as a
by-product of their enzymatic activity. The choice of an
enzyme within the glycosidase or polysaccharidase class to
employ in a given cookie formulation will depend upon parameters
which are conventionally considered in connection with enzymatic
processes including baking temperatures and times, pH of the
dough, water content, and the relative availability of the substrate to the action of the enzyme. Of course, baking conditions,
pH of the cookie dough, etc. may also be adjusted to optimize
the activity of the enzyme and, hence, the in situ generation of
the crystallization-resistant sugar component.

Glycosidases hydrolyze simple glycosides and oligosaccharides. An example of a useful enzyme from that class is
invertase which acts upon sucrose to provide invert sugar as the
by-product of its enzymatic action. The entire quantity of
sucrose present need not be inverted, so long as a sufficient
amount of invert sugar has been produced to inhibit the crystallization of any unconverted sucrose in the baked dough. Invert
sugar generated in situ is itself crystallization-resistant (or
only slowly crystallizable relative to sucrose under similar
conditions) and is capable of binding water.

Enzymes suitable for use herein also include polysaccharidases which act upon farinaceous materials to provide
lower molecular weight saccharides such as glucose, maltose,
modified starches, dextrins, etc. Enzymes of this type include

15

the alpha- and beta-amylases. Mixtures of different enzymes may also be employed. For example, a primary enzyme .(e.g., a bacterial alpha-amylase) may be employed to act upon a complex polysaccharide to provide simple glycosides, dextrins, and/or oligosaccharides which are then acted upon by the auxiliary enzyme (e.g., a glucosidase) to provide a greater amount of lower molecular weight sugars than would be produced by the action of the primary enzyme alone.

A particularly suitable enzyme for use herein is alpha-amylase which acts upon starch to provide maltose and dextrins. Alpha-amylases, such as those obtained from bacterial sources (B. subtilis or B. mesentericus) are known to be quite heat stable, and have been reported to be able to retain some activity at temperatures as high as 100°C. Enzymes of this type are commercially available and include Fresh-N, a product of G.B. Fermentation Industries, Inc., Charlotte, North Carolina, as well as Termamyl® and Bacterial Amylase Novo (BAN) which are products of Novo Industri A/S, Novo Allé, DK-2880 Bagsvaerd, Denmark.

When the only substrate for the enzyme is provided by the starch component of the flour in cookie dough, it is preferred to employ the equivalent of about 12 SKB units of alpha-amylase to as high as about 2,000 SKB enzyme activity units per 100 grams of starch in the dough. Stated alternatively, the number of SKB units/ 100 g of flour will typically fall within the range of about 6-1000 SKB units, because flour generally includes about a 50 weight percent portion of starch. SKB units may be assayed by the method of Sandstedt, Kneen and Blish, given in Cereal Chemistry, Vol. 16,712 (1939).

When the substrate for the enzyme is provided by the starch component of flour,as well as an added pregelatinized starch

16

component in the dough, the SKB units of enzyme employed may be reduced from that given above. For example, a preferred substrate comprises a pregelatinized starch component and cake flour in a weight ratio of about 1:1-10, e.g. 1:1.2-7, wherein the preferred enzyme activity units employed with such a substrate are about 50 to 1000 SKB units per 100 grams of the combined substrate.

The pH of the cookie dough to which the bacterial alpha-amylase is added is preferably about 6.0 to about 7.5 (most preferably about 6.2), assuming that the bacterial alpha-amylase-containing dough will be baked at a temperature of about 175°F to about 425°F. Thus, the cookie doughs employed in combination with alpha-amylase enzyme preferably do not include baking soda or any other ingredient which would place the pH of the dough outside the preferred pH range stated above.

Cooking times and oven temperatures may also be adjusted to aid in optimizing the action of the alpha-amylase enzyme on the starch substrate. Typical baking times and oven temperatures employed are about 175 to about 450°F, preferably about 200°F to about 400°F for about 5 to 15 minutes. During baking, the cookie may be incubated for an extended time period at oven temperature lower than that normally employed to bake cookies, in order to provide an extended time period over which the enzyme is active and not heat inactivated during the baking process. The incubation period may be followed by the completion of baking at higher enzyme inactivating oven temperatures. For example, the cookies may be baked briefly, e.g. about 1 - 3 minutes at oven temperatures of about 425-475°F to rapidly bring the enzyme-containing dough in the center of the composite to optimal temperatures, then at a second lower temperature for an extended period of time to maintain optimal activity (e.g. about 115°F to about

16

200°F for about 25 to 75 minutes),followed by a third baking temperature at a higher temperature during which the baking of the cookie is completed. During baking of the prepared dough composite, in situ enzymatic conversion of substrate in the chewy dough occurs so as to result in the presence in such dough of a crystallization-resistant sugar component. If the enzyme is not totally inactivated during the baking process, the conversion at room temperature of substrate may continue in some degree even after the cookies have been baked.

In the process of the present invention, the enzyme-containing cookie dough is either sandwiched between two layers of the cookie dough productive of a crispy region, or the enzyme-containing dough is completely enveloped or surrounded by the crispy cookie dough. For example, the enzyme containing dough may be enrobed in the dough which is productive of the crispy region, by flattening a portion of the latter and employing it to enrobe a spherical portion of the enzyme-containing dough. An enrobing process equivalent to that described above may be performed automatically by conventional apparatus, such as the Model 207, Rheon Encrusting Machine, available from the Rheon Automatic Machinery Company.

The dough employed to make the crispy region and the dough employed to make the chewy region may contain the same ingredients, differing only by the presence of an enzyme in the dough that will be baked to the chewy region, or if desired, different doughs may be employed to form the outer crispy layer and the inner chewy region of the baked product. In addition, a substrate additive for the enzyme may be included in the enzyme-containing dough, but not included in the crispy dough. Moreover, by adjusting the amount of dough productive of a chewy region

18

relative to the amount of dough productive of the outer crispy region employed in the composite dough, the ratio of chewy to crispy regions in the final baked product may be adjusted as desired. For cookie products having the crispy-chewy textural dichotomy of a fresh-baked cookie, a weight ratio of dough productive of a chewy region relative to dough productive of a crispy region of about 0.8-3.0:1, and preferably about 1:1 may suitably be employed.

After equilibration of moisture in the baked cookie, the result is a product in which, in the outer (upper and lower) layers, a crispy texture is achieved by reason of the crystallization of the sucrose therein and the concomitant loss of moisture and bound water associated with crystallization. In the inner regions of the product, however, the presence of an _in situ_ generated crystallization-resistant sugar component results in a moist, chewy texture which persists in that region during storage for extended time periods.

A number of important features are attained through the present invention. For example, it will be appreciated that the enzymatic processes which are involved in the present invention are designed to render the entire chewy dough bakeable to a chewy cookie region in the composite dough of this invention. As such, the processes of this invention differ from those described in the earlier-noted patents of Moses and Youngquist et al., wherein the enzymatic processes are designed to produce, from a single dough, a baked cookie containing both chewy and crisp textural regions. The enzymatic processes involved in preparation of the chewy cookie regions used in the present invention are performed in a way such that enzymatic activity generally occurs throughout the chewy dough (e.g., through use of enzymes which are not inactivated by the temperatures encountered in any portion of the cookie during baking). At the same time, appropriate choice of enzyme and substrate levels will insure that enzymatic activity does not occur to any significant degree in the upper and lower (or surrounding) crispy dough regions. This aim is also aided by the fact that the temperatures attained during baking in the crispy dough regions (being in contact with the heating surface or directly exposed to heated atmosphere) result in rapid enzyme inactivation.

In addition, it will be appreciated that neither of the doughs employed in the present invention contains, in its original formulation, the quantity of crystallization-resistant, water-binding materials employed in prior processes (for generation of chewy cookie regions). Thus, while each of the crispy and chewy doughs of the present invention may optionally be formulated ab initio to contain certain levels of such materials, the present invention relies upon the generation of the major proportion of such materials in situ in the chewy dough to obtain a dough bakeable to a chewy cookie region.

An important advantage achieved through this manner of processing is the ability to begin with essentially conventional, easily-processible dough compositions for both the crispy and chewy doughs, avoiding the difficult processing problems associated with doughs wherein their ability to be baked to soft, moist, chewy cookie regions is attained by initially formulating the doughs using materials such as fructose, honey, invert sugar and other viscous, tacky materials.

Still further, the use of an in situ generated crystallization-resistant sugar component contributes to lesser degrees of browning reaction differentials than occur when doughs

20

initially formulated to contain such materials are baked with conventional sucrose-containing doughs. In these latter doughs, the browning reactions begin immediately upon the start of the baking cycle; in the doughs of the present invention, the materials which might otherwise lead to browning reactions, differing in intensity from those occurring in the crispy, sucrose-containing doughs, are only beginning to come into existence during the baking cycle and thus experience less time for reaction. Also, since some quantity of these _in situ_ generated materials may occur even after the cookie has been baked, obviously little browning will occur in the cooling temperature environment existing after baking.

This latter advantage is also significantly aided by maintaining the chewy dough within or between the sucrose-containing dough(s) during baking. By maintaining the chewy dough out of direct contact with baking surfaces and out of direct exposure to the heating atmosphere, browning reactions are minimized. As a result of these features, it is possible to prepare baked cookies from dough composites wherein the doughs do not develop significantly different colors during baking and produce a baked cookie having a substantially uniform crumb color throughout its cross section.

Features of the present invention will be explained further with reference to the following examples.

### EXAMPLE 1

A composite cookie was prepared from the following recipe:

| Ingredient | Amount |
|---|---|
| Cake Flour (American Beauty) | 597 g |
| Baking Powder | 2 tsp. |

| Ingredient | Amount |
|---|---|
| Baking Soda | 1 tsp. |
| Solid Shortening[1] (MFB®,Hunt-Wesson Co.) | 397 g |
| Sucrose | 599 g |
| Eggs | 4 whole |
| Milk | 4 tbs. |
| Vanilla | 4 tsp. |
| Salt | 1 tsp. |
| Pregelatinized Starch (Binasol®,A.E.Staley Co., Decatur, Ill.) | 1 cup |

[1] Hydrogenated palm and soybean oil.

The eggs, sugar, shortening and vanilla were creamed in a Hobart mixer for two minutes at slow speed, the milk was then added and creamed with the other ingredients for an additional two minutes. A premix of the flour, baking powder, baking soda, salt and starch was then added slowly to the mixture and blended in a Hobart mixer at low and then high speeds. After mixing, the dough was refrigerated for about one hour. One-half ounce portions of this dough were flattened into a rectangular form and used to enrobe inner, spherical one-half ounce portions of dough prepared by the above procedure, modified by the addition of 2.0 g of bacterial alpha-amylase enzyme (from B. subtilis, Clinton Corn Products, Inc., 1400 SKB per gram of enzyme). The enzyme was added to the ingredients given above in the form of a suspension in the milk.

The composite dough was baked at 400°F for 10 minutes, cooled and sealed into airtight packages. The packages were opened after a one, two and three-week storage period and the organoleptic properties of the cookies qualitatively evaluated in

22

comparison with controls prepared by enrobing an equally-sized portion of enzyme-free dough. The composite, enzyme-containing cookies retained a moist, chewy center and a crisp exterior throughout the test period.

EXAMPLE 2

A composite cookie was prepared from the following formulation:

| Ingredient | Outer Dough | Inner Dough |
|---|---|---|
| Flour | 454 g | 354 g |
| Shortening | 184 g | 184 g |
| Pregelatinized Starch | - | 100 g |
| Sucrose | 202/79 g | 281 g |
| Salt | 3.2 g | 3.2 g |
| Baking Soda | 4.3 g | 4.3 g |
| Water | 41 g | 100 g |
| Eggs | 112 g | 112 g |
| NFDM | 5.4 g | 5.4 g |
| Enzyme (Fresh-N®, G.B. Fermentation Ind.,Inc., Charlotte, N.C., 27 SKB/ gram of enzyme) | - | 10.0 g |

To prepare the inner dough, the eggs, sucrose and shortening were creamed for two minutes in a mixer at slow speed. A mixture of a suspension of the enzyme in the water was creamed in over 2 minutes, followed by a premix of the remaining ingredients which were slowly added, then blended at low and then high speeds. The outer dough was prepared similarly, except that the enzyme and modified starch were omitted and 79 g of the sucrose was added after addition of the final premix. The refrigerated doughs were formed into composites according to the procedure of Example 1 and baked into cookies which exhibited organoleptic properties similar to those of Example 1. In useful modifications

23

of the procedure of Example 3, the enzyme level was increased to 18.0 g and baking times of 13 minutes at 400°F and 15 minutes at 350°F, respectively, were employed for both dough composites.

## EXAMPLE 3

The procedure of Example 1 is followed with the following modifications: a) the baking soda is omitted from the inner dough, or b) lactic acid (80%) is added to the inner dough in order to lower the pH of the inner dough to a range which would optimize the activity of the B. subtilis alpha-amylase enzyme to about 6.0-6.5 (before baking) and 7.0-7.5 (after baking). Baking is carried out for three minutes (460°F), 1 hour (140°F) and 6.5 minutes (375°F), or alternatively for 8 minutes at an average of 400°F (band oven).

24

CLAIMS

1. A process for preparing a baked, crumb-continuous, flour-based product having discrete storage-stable regions of crumb having a crispy texture and discrete storage-stable regions of crumb having a chewy texture, said process comprising the steps of:

a. preparing a first dough, bakeable to a crispy crumb structure, comprising flour, shortening, water and sugar;

b. preparing a second dough, bakeable to a chewy, moist crumb structure, including as ingredients of said second dough at least flour, shortening, water and an enzyme, wherein at least one ingredient of the second dough is acted upon by the enzyme during baking to provide in the baked second dough an amount of a crystallization-resistant sugar effective to bind water and to inhibit the crystallization of any readily-crystallizable sugar present in the second dough;

c. forming a composite dough by surrounding or sandwiching the second dough within or between the first dough so that no surface of the second dough is in direct contact with a heated baking surface or directly exposed to a heated atmosphere when the second dough is baked; and

d. baking said composite dough to provide a final baked product in which there is present, after equilibration of moisture therein, discrete regions of crumb contributed by said first dough having a crispy texture and regions of crumb contributed by said second dough having a moist, chewy texture.

2. The process according to Claim 1 wherein said product is a cookie.

25

3. The process according to Claim 2 wherein said sugar component of said first dough comprises sucrose.

4. The process according to Claim 3 wherein the second dough includes sucrose and the enzyme in the second dough is invertase which acts upon said sucrose during baking to provide a crystallization-resistant sugar component in said second dough which comprises invert sugar.

5. The process according to Claim 3 wherein the enzyme present in the second dough is a polysaccharidase, and a substrate therefor in the second dough comprises starch which is acted upon by the enzyme, under the conditions at which the composite dough is baked, to provide in situ in said second dough a crystallization-resistant sugar selected from the group consisting of glucose, maltose, dextrins, oligosaccharides and mixtures thereof.

6. The process according to Claim 5 wherein the enzyme is bacterial alpha-amylase, and the substrate in the second dough comprises starch which is subjected to the enzymatic action of bacterial alpha-amylase under the conditions at which the composite dough is baked to form in situ in the second dough an effective amount of a crystallization-resistant sugar comprising maltose and dextrins.

7. The process according to Claim 5 wherein the starch in the second dough is comprised of the starch fraction of flour and pregelatinized starch.

8. The process according to Claim 7 wherein the weight ratio of pregelatinized starch to flour in the second dough is about 1:1 to about 1:10.

0136159

26

9. The process according to Claim 3 wherein the enzyme in the second dough is bacterial alpha-amylase and the pH of said dough prior to baking is in the range of about 6.0 to about 7.5.

10. A composite dough for preparing a baked, crumb-continuous flour-based product having distinct storage-stable regions of crumb having a crispy texture and distinct regions of crumb having a chewy texture, said composite dough comprising:

a. a first dough portion, bakeable to a crispy crumb structure comprising flour, water, shortening and sugar; and

b. a second dough portion bakeable to a chewy, moist crumb structure including as ingredients thereof at least flour, water, shortening and an enzyme, wherein at least one ingredient of the second dough is acted upon by the enzyme when the composite dough is baked to provide in the baked second dough an amount of crystallization-resistant sugar effective to bind water and to inhibit the crystallization of any readily-crystallizable sugar present in the second dough;

c. wherein the second dough is completely enrobed in the first dough portion; and

d. the composite dough is bakeable to a product in which there is present after equilibration of moisture present in the baked product, discrete regions of crumb contributed by the first dough having a crispy texture, and discrete regions of crumb contributed by the second dough having a moist, chewy texture.

27

11. The composite dough of Claim 10 wherein the sugar component of the first dough portion comprises sucrose, and said composite dough is bakeable to a cookie product.

12. The composite dough of Claim 11 wherein the weight ratio of the second dough to the first dough is about 0.8 to about 1.8:1.

13. The composite dough according to Claim 11 wherein the enzyme is bacterial alpha-amylase, a substrate in the second dough for the action of said enzyme comprises starch, and the pH of said second dough portion is about 6.0 to about 7.5

14. The composite dough according to Claim 13 wherein said starch comprises pregelatinized starch and the starch fraction of flour.

15. The composite dough according to Claim 14 wherein said second dough includes pregelatinized starch and flour in a weight ratio of about 1:1 to about 1:10.

16. The composite dough according to Claim 11 wherein the enzyme in said second dough portion is a polysaccharidase, and wherein a substrate therefor in the second dough comprises starch which, when acted upon by said enzyme under the conditions at which the composite dough is baked, provides in situ in said baked second dough an effective amount of a crystallization-resistant sugar selected from the group consisting of glucose, maltose, dextrins, oligosaccharides and mixtures thereof.

28

17. The composite dough according to Claim 11 wherein the enzyme is invertase and a substrate therefor in the second dough comprises sucrose.

18. The composite dough according to Claim 11 wherein the enzyme is a glycosidase or polysaccharidase and said crystallization-resistant sugar is selected from the group consisting of fructose, dextrose, invert sugar, maltose, dextrins, oligosaccharides and mixtures thereof.

19. A composite dough for preparing a baked, crumb-continuous cookie product having discrete storage-stable regions of crumb having a crispy texture and discrete regions of crumb having a chewy texture, said composite dough comprising:

a. a first dough portion bakeable to a crispy crumb structure comprising flour, water, shortening and sucrose; and

b. a second dough portion bakeable to a moist, chewy crumb structure having a pH of about 6.0 to about 7.5 and including as ingredients thereof water, shortening, flavorants, pregelatinized starch in a weight ratio to flour of about 1:1 to 1:10, and an amount of bacterial alpha-amylase sufficient to provide the equivalent of about 12 to about 2000 SKB's of said enzyme per 100 grams of total starch in said second dough;

c. wherein the first dough portion completely enrobes the second dough portion, the weight ratio of the second dough portion to the first dough portion is about 0.8 to about 1.8:1; and

d. the composite dough is bakeable to a cookie in which there is present after the equilibration of moisture in the baked cookie, discrete regions of crumb contributed by the second dough having a moist, chewy texture, and discrete regions of crumb contributed by the first dough having a crispy texture.

20. A process for preparing a baked crumb-continuous cookie product having discrete storage-stable regions of crumb having a crispy texture and discrete storage-stable regions of crumb having a chewy texture comprising:

a. preparing a first dough portion bakeable to a crispy crumb structure, comprising flour, water, shortening and sucrose; and

b. preparing a second dough portion bakeable to a moist, chewy crumb structure, having a pH of about 6.0 to about 7.5 and including as ingredients thereof water, shortening, flavorants, pregelatinized starch in a weight ratio to flour of about 1:1 to about 1:10, and an amount of bacterial alpha-amylase sufficient to provide the equivalent of from about 12 to 2000 SKB's of enzyme per 100 grams of total starch in the second dough;

c. forming a composite by enrobing the second dough in the first dough so that no surface of the second dough is in direct contact with a heated baking surface or directly exposed to a heated atmosphere during baking; and

d) baking said composite dough under conditions at which the enzyme acts upon substrate provided by the flour and pregelatinized starch in the second dough to provide in the baked second dough an amount of crystallization-resistant sugar effective to bind water and to inhibit the crystallization of any readily-crystallizable sugar present in said baked second dough;

30

and wherein the baked cookie product has regions of crumb contributed by the first dough having a crispy texture and regions of crumb contributed by the second dough having a moist, chewy texture.

21.  The process according to Claim 20 wherein the weight ratio of the second dough to the first dough is about .8 to about 1.8:1.

22.  A process for preparing a composite dough which is bakeable to a crumb-continuous, flour-based product having discrete storage-stable regions of crumb having a crispy texture and discrete storage-stable regions of crumb having a chewy texture, said process comprising the steps of:

a.  preparing a first dough, bakeable to a crispy crumb structure, comprising flour, water, shortening and sugar, and

b.  preparing a second dough, bakeable to a chewy, moist crumb structure, including as ingredients of said second dough at least flour, shortening, water and an enzyme, wherein at least one ingredient of the second dough is acted upon when the composite dough is baked to provide in the baked second dough an amount of a crystallization-resistant sugar effective to bind water, and to inhibit the crystallization of any readily-crystallizable sugar present in the second dough; and

c.  forming a composite by completely enrobing the second dough in the first dough, wherein said composite when baked provides a product having regions contributed by the first dough having a crispy texture, and regions contributed by said second dough having a chewy texture.

23. The process according to Claim 22 wherein the enzyme is invertase, the sugar in said first dough comprises sucrose, and said composite dough is bakeable to a cookie product.

24. The process according to Claim 22 wherein the sugar in the first dough comprises sucrose; the second dough has a pH of about 6.0 to about 7.5 and includes as ingredients thereof water, shortening, flavorants, pregelatinized starch in a weight ratio to flour of about 1:1 to about 1:10, and an amount of bacterial alpha-amylase sufficient to provide the equivalent of about 12 to about 2000 SKB's of said enzyme per 100 grams of total starch in the second dough.

25. The process according to Claim 24 wherein the weight ratio of the second dough to the first dough in the composite dough is about 0.8 to about 1.8:1.